# EUROPEAN PATENT APPLICATION

(11) **EP 3 011 871 A1**
(43) Date of publication of application: **27.04.2016**
(21) Application number: 14189601.9
(22) Date of filing: 20.10.2014
(51) Int. Cl.: A47C 7/38, B60N 2/46

(54) **Device for supporting a head in an upright position**

(71) Applicant: Justus, Michael, 20148 Hamburg (DE)
(72) Inventor: Justus, Michael, 20148 Hamburg (DE)
(74) Representative: Uexküll & Stolberg

(57) **Abstract**

The present invention relates to a device (1) for supporting a head (23) of a sitting or a standing person (27) in an upright position comprising a clamping section (5) and a support section (3). The clamping section (5) and the support section (3) are formed from a flexible material having a shape of a flat belt strap (6). The support section (3) is formed as an annularly closed loop (9) and comprises a flat contact surface (17). The device (1) can be arranged on a person (27) such that the contact surface (17) is in contact with a cheek (31) and an occiput (29) of the head (23), at least a part of the annularly closed loop (9) extends on a ventral side of a chin or a neck of the person (27), the device (1) extends from the support section (3) to the clamping section (5) on a dorsal side of an upper body of the person and the clamping section (5) is held between a first surface and a second surface. Further, the present invention relates to the use of such a device and a method for supporting a head in an upright position.

## Description

The present invention relates to a device for supporting the head of a sitting person in an upright position, for a use of such a device and a method for supporting a head in an upright position.

It is generally difficult for a person to sleep in a sitting or standing position, because the head falls forwardly or sideways in an uncontrolled manner as soon as the person has fallen asleep. For this reason, without additional means or devices a relaxing sleep is not possible while being in a sitting position. This is a considerable problem, for example, for travelers in aircraft, cars and trains.

Attempts have been made to solve these problems by means of various different supporting devices, such as particularly shaped cushions or frames. However, these solutions have turned out not to be satisfactory, because they provide an insufficient or unreliable supporting effect, are of complex construction, are difficult to use and/or have significant space requirements making it difficult for a traveler to take them on a trip. Furthermore, they often cause an inconvenient and sometimes painful pressure on sensitive areas of the body, such as, for example, the forehead, the temple, the jaw, the back of the neck, the vertebrae, etc., which pressure may keep the user from an extended period of rest and, upon prolonged period of use, may even result in negative health effects.

U.S. 4,560,201 discloses a device for supporting a head in an upright position comprising a support section, a mounting section and a holding section. The support section comprises a first contact part which is adapted for engaging with a forehead of a person using the device. The mounting section comprises a second contact part for engaging with a skull cap of the person using the device. The holding section is arranged around the back of the person using the device and turned multiple times around a forearm of the person using the device.

The device has been found disadvantageous as it can only support a head in a forward direction which is often not necessary as the head can lean against the head rest of a seat. Furthermore, most of the weight of the head has to be supported by the forehead which results in an uncommon and uncomfortable sensation. In addition, winding the holding section multiple times around an arm has been found to reduce the blood flow in the arm and limits the time the device can be used continuously. The holding section also restricts or hinders a movement of at least one arm of the user. Finally, the arrangement of the contact parts of the support section has to be adapted to the size of the head of the user. Thus, the same device cannot be used by two different persons and different devices have to be offered for differently sized heads.

Another device for supporting a head in an upright position is known from WO 2013/131767 A2 also having a support section and a holding section. Both sections are formed as annularly closed loops. The size of both loops has to be modified for each user. When the device is arranged on the user it has to be tightly fitted to the shape of the body of the user. This requires the use of buckles which increases the weight of the device and makes it more uncomfortable as buckles tend to leave pressure marks on the body. The support section comes into contact with a forehead of a person using the device which has been found uncomfortable as already mentioned above.

In view of the disadvantages of the prior art devices it is an object of the present invention to provide a device for supporting the head of a sitting person in an upright position, which device is of simple construction, can be made to be of low weight, is comfortable to wear and is easy to use and to transport, and which nevertheless provides a suitable and reliable support effect.

This object is achieved by a device for supporting a head of a sitting person in an upright position as defined in claim 1, a use of such a device according to claim 9 and a method of supporting a head according to claim 13. Preferred embodiments of the device, the use and the method are the subject-matter of the dependent claims.

According to a first aspect of the invention the problem is solved by a device for supporting a head of a sitting person in an upright position comprising a clamping section and a support section. The clamping section and the support section are formed from a flexible material having a shape of a flat belt strap. The support section is formed as an annularly closed loop and comprises a flat contact surface for contacting a cheek and an occiput of a head to be supported in an upright position. The clamping section is connected to the support section such that a load can be transferred from the support section to the clamping section. The device can be arranged on a person whose head is to be supported in an upright position such that the annularly closed loop extends around the head of the person in such a manner that the contact surface is in contact with a cheek and an occiput of the head, at least a part of the annularly closed loop extends from the cheek onward on a ventral side of a chin or a neck of the person, the device extends from the support section to the clamping section at least partly on a dorsal side of an upper body of the person and the clamping section is held between a first surface and a second surface such that a load created by a tilting of the head towards a transversal direction is transferred through the device to the clamping section and from the clamping section to the first surface and the second surface. The device according to the present invention comprises two sections, a support section and a clamping section. In a preferred embodiment the device consists of these two sections, i.e., it is only made up of a clamping section and a support section and comprises no further sections. Both the support section and the clamping section are made from a flexible material. A flexible material can be any kind of material that deforms at least in some way in a non-plastic manner. In an exemplary embodiment a flexible material is a woven fabric made, for example, from a plastic material such as polyamide or an organic material. The material is, however, preferably not stretchable in an extension direction of the device to provide sufficiently rigid support of the head such that a comfortable resting is possible.

The support section and the clamping section have a shape which is similar to the shape of a flat belt strap. In other words, the sections comprise two extended or flat surfaces extending in parallel to one another and on opposite sides of the sections. A thickness of the material which forms the sections between the extended or flat surfaces is considerably less than a width of the extended surfaces. Using a flat belt strap prevents pinching patches and allows rolling the entire device up for storage. Furthermore, when the device is rolled up it does not twist by itself and does not form unintended knots which reduce the ease of use. In a preferred, exemplary embodiment the clamping section and the support section are formed from a flat belt strap having a width of 2.5 cm to 3.0 cm which prevents pinching or cutting in of the belt strap into the skin of a person using the device.

The support section is formed as an annularly closed loop, i.e., the support section does not have any open or loose end. The support section can be formed, for example, by permanently connecting the material forming the support section to itself such that a closed loop or ring is formed. If the support section is formed like that one of the extended or flat surfaces can, for example, be arranged on the inside of the loop whereas the other extended or flat surface forms the outside of the loop. It is, however, also conceivable that the material forming the support section is twisted such that the same surface partly forms an outside of the loop and an inside of the loop. However, such a twisted arrangement is less comfortable than a non-twisted arrangement.

Further, the support section comprises a flat or extended contact surface for contacting a cheek and an occiput of a person using the device. The contact surface can either be formed by the support section itself, i.e., by one of the flat surfaces of the support section, or an additional material can be attached to the support section which forms the contact section. This can be done, for example, by attaching an elastic material to the support section which improves the comfort of a person using the device.

The support section and the clamping section are connected to one another such that a load transfer from one of the sections to the other section is possible. In a preferred embodiment the support section and the clamping section are connected to one another by forming them as a single piece, for example, by making them from a single belt strap. A device made from a single piece can be easily manufactured as no additional means are required to connect the support section and the clamping section.

The device is further characterized in that it can be arranged on a person whose head is to be supported in an upright position in a specific manner which improves the comfort of the person wearing the device compared to previously known devices. To this end the annularly closed loop can be arranged around the head of a person such that the contact surface is in contact with an occiput and a cheek of the person. The contact surface is, for example, in contact with the top of the head and the left cheek of the person using the device. In other words, the closed loop does not extend over the forehead of the person using the device which is considerably less comfortable. From the cheek the closed loop further extends on the ventral or forward side of the chin or the neck of the person using the device.

The support or the clamping section is then directed from the head to a dorsal side of the upper body of the person using the device. The device can, for example, be arranged in such a manner that it extends behind the left or the right shoulder of the person using the device. Preferably, the device is arranged such that it extends to the outer side of the shoulder which improves the lateral or sideways support of the head. Finally, the clamping section can be held between a first surface and an additional, second surface. The first surface can, for example, be a body part of the person using the device such as a tight of the person or an arm of the person and the second surface can, for example, be a seating on which the tight rests or the chest of the person. The first surface can, however, also be formed by the device itself and the second surface can, for example, be an armrest of a chair or a seat-belt around which the clamping section has been wound. Thus, the device is guided from the head over the back of the person back to the front again where it is held or clamped between two surfaces.

Thereby, the device provides a support for the head against unintended lateral or sideways movement, i.e., movement to the left or the right. If the device is arranged correctly, the head of the person using the device may rest comfortably against the support section. The person using the device does not have to actively hold the clamping section as it is preferably clamped between a first surface, for example, in form of at least one body part, and a second surface largely due to the weight of the body parts. This provides advantageously that the arms are still free to move. Contrary to previously known devices for supporting a head in an upright position, the device according to the present invention does not extend across the forehead but holds the head only laterally by extending across the cheek. It has been found by the inventor that contrary to what is expected this kind of support is considerably more comfortable. Most persons are used to the feeling that their head is supported on a cheek when resting on a pillow whereas the forehead is usually not resting against any support. The device does, thereby, provide a support of a head in a more natural sleeping position where lateral support of the head is required. If the device is arranged as described in the preceding paragraphs, the device does not cut into any parts of a body of the user. Furthermore, though it can be attached to an armrest or a seat belt, this is not necessary. If not attached to an armrest or a seat belt, the device is only clamped between two parts of a body or one part of a body and, for example, a seating such that it can be released immediately, for example, in case of an emergency situation.

In addition, the device according to the present invention can be used by different users, for example, adults and children without any necessity of adjustment. In particular, a circumferential length of the closed loop of the support section can be chosen sufficiently long such that it fits all kinds of users and, for example, an additional pillow provided onboard and aircraft can be fitted between the device and the head of the user. Hence, advantageously no buckles are required to adjust a length of the device which increase the weight of the device and reduce the comfort of a person using the device as rigid buckles tend to create pinch marks. Also, clothing and hair cannot be jammed or clamped in non-existing buckles. Also a thickness of the device is reduced, in particular, when rolled up into a storage position if no buckles are used.

The device according to the present invention can, for example, be used by passengers travelling in aircraft or trains or by soldiers on duty that want to sleep or at least rest their head. Other examples of potential users are, for example, mountain climbers. It should be noted that the device according to the present invention can even be arranged on a head of the user if the user wears a helmet or a cap. Furthermore, the device can be worn on top of clothing of different thickness without requiring any adjustment of the circumferential length of the support section.

The device according to the present invention can advantageously be used to support a head in opposite lateral or sideways direction depending on the way it is arranged on the user. Thus, a user can choose his preferred side in which his head shall be supported or even switch sides from time to time to get a more comfortable rest and avoid pressure marks.

In a preferred embodiment a circumferential length of the annularly closed loop formed by the support section is fixed. Hence, the material forming the loop can be permanently attached to itself, for example, by a chemical bond like a glue or a mechanical bond in form of sewing. This improves the reliability of the device. Advantageously no buckle or the like is required to adjust the circumferential length of the device. Using a buckle or something similar reduces not only the comfort of the user of the device as a rigid element resting against the body usually reduces the comfort of the person, it also leads to a reduction in the production cost as less parts are required and a reduction in weight.

The circumferential length can, for example, be approximately 120 cm, i.e., if the loop is arranged flat such that two lateral surfaces of the belt strap are arranged on top of one another the entire length of the support section is approximately 60 cm. Such a closed loop would have a diameter of approximately 37 cm to 39 cm if arranged in form of a circle. In an exemplary embodiment this makes up roughly a third of a total length of the device, i.e., the total length in the exemplary embodiment is approximately 180 cm to 190 cm and a length of the clamping section is approximately 120 cm to 130 cm. These dimensions have been found to be sufficient for most users and allow the device to be used even when the user wears thick closing, a helmet or a cap.

It is further preferred that the clamping section comprises at least one gripping means for improving a load transfer from the device to at least one part of a body of a person whose head is to be supported in an upright position and a second surface when the clamping section is held between the at least one part of a body and the second surface. The gripping means can be, for example, an anti-slip coating, an elevation, an indentation or knobs on the material forming the clamping section. By providing at least one and preferably a plurality of gripping means clamping or holding of the clamping section is improved. Hence, less force is required to hold the clamping section and/or higher loads can be supported by the support section and, thus, the entire device.

Finally, the device is formed such that it can be rolled up into a stowage position. In the stowage position the device has a generally cylindrical shape having a height and a radius. The height corresponds to a width of the clamping section and/or the support section. If the device is rolled up it can advantageously easily be stowed without requiring much space which makes handling for the user easier. The maximum radial extension, i.e., the radius, is largely defined by the thickness of the material from which the support section and the clamping section are formed and the entire length of the device, i.e., half of the circumferential length of the loop plus the length of the clamping section. The height of the rolled up device is equal to the maximum width of the support section, e.g., 2.5 cm to 3.0 cm, and the clamping section as the device does not comprise any further parts.

In a second aspect the problem is solved by a use of a device for supporting a head of a person according to any of the preceding embodiments.

Preferably, the device is used in that the annularly closed loop is arranged on a head of the person in such a manner that the contact surface is in contact with a cheek and a occiput of the head and at least a part of the annularly closed loop extends from the cheek onward on a ventral side of a chin or a neck of the person and the device is further arranged such that the device extends from the support section to the clamping section at least partly on a dorsal side of an upper body of the person.

It is further preferred that the clamping section is held between a first surface in form of a tight of the person and a second surface in form of a seating on which the at least one tight rests.

Alternatively, the device can preferably be used in that the support section is held between a first surface in form of an arm of the person and a second surface in form of a ventral side of the upper body.

The two embodiments described in the preceding paragraphs are particularly preferred as the device is not permanently fixed to an armrest or a seat belt. Hence, a person using the device can stand up any time without having to release any fixations, for example, in emergency situations. It is also nowhere fixed to a body of the person using the device which reduces the comfort of wearing or using the device considerably.

Advantages of the different preferred embodiments and different aspects of the use of the device according to the present invention are identical to those advantages that have already been described in the preceding paragraphs with respect to the device itself.

The problem is further solved by a method of supporting a head of a sitting person in an upright position using a device according to any of preceding preferred embodiments, wherein the annularly closed loop is arranged on the head of the person in such a manner that the contact surface is in contact with a cheek and an occiput of the head and at least a part of the annularly closed loop extends from the cheek onward on a ventral side of a chin or a neck of the person and the device is further arranged such that the device extends from the support section to the clamping section at least partly on a dorsal side of an upper body of the person.

Preferably, the clamping section is held between a first surface in form of a tight of the person and a second surface in form of a seating on which the at least one tight rests.

Alternatively it is preferred that the support section is held between a first surface in form of an arm of the person and a second surface in form of a ventral side of the upper body.

Advantages of the different preferred embodiments and different aspects of the method of supporting a head in an upright position according to the present invention are identical to those advantages that have already been described in the preceding paragraphs with respect to the device itself or the use of the device.

In the following, an exemplary embodiment of the device and two different exemplary embodiments of a use of the device and a method of using the device are described in more detail with reference to the drawings. In the drawings
- Fig. 1: shows a perspective view of an exemplary embodiment of a device according to the present invention,
- Fig. 2: shows a perspective view of an arrangement of an exemplary embodiment on a head of a person using the devices,
- Figs. 3a to 3e: show a first exemplary embodiment of a use of a device according to the present invention and a first embodiment of a method of supporting a head in an upright position according to the present invention,
- Figs. 4a to 4c: show a second exemplary embodiment of a use of a device according to the present invention and a second embodiment of a method of supporting a head in an upright position according to the present invention and
- Fig. 5: shows a perspective view of an exemplary embodiment of a device according to the present invention in a stowage position.

Throughout the Figures like elements are denoted with like reference numerals.

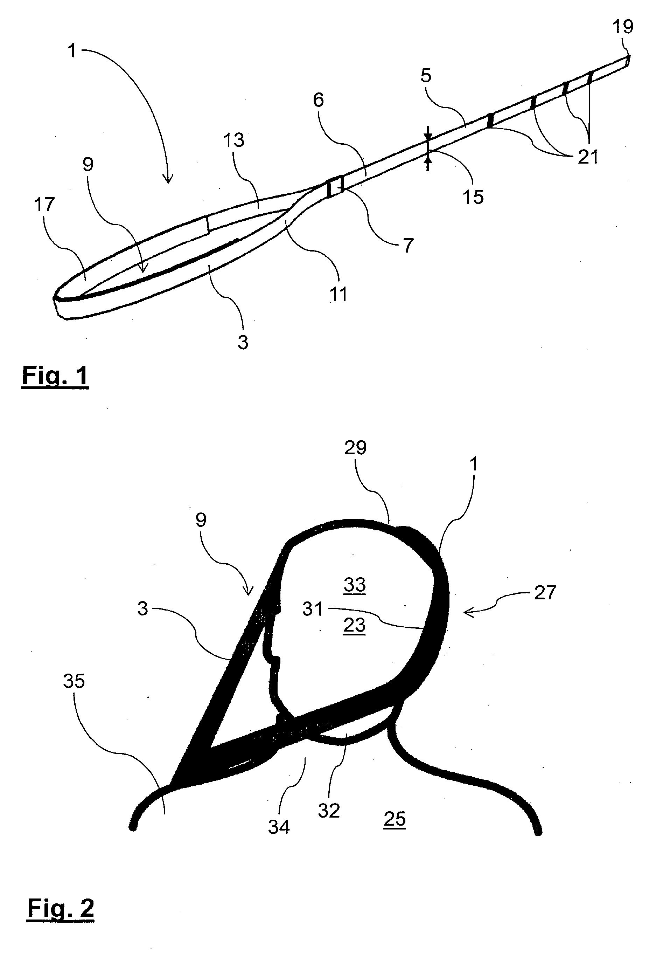

Fig. 1 shows an exemplary embodiment of a device 1 according to the present invention for supporting a head of a sitting or standing person in an upright position. The device 1 consists of a support section 3 and a clamping section 5. The support section 3 and the clamping section 5 are made in one piece from a flat belt strap 6. The belt strap 6 is made from a flexible material in form of a woven fabric. The belt strap 6 comprises a first extended or flat surface 11 and a second extended or flat surface 13 which extend in parallel to another. Between the first extended surface 11 and the second extended surface 13 a thickness of the belt strap 6 is defined. Said thickness is considerably smaller than a width 15 of the belt strap 6 which is between 2.5 cm and 3.0 cm. An entire length of the device is approximately 190 cm. Out of these the support section makes up roughly one third, i.e., approximately 60 cm, and the clamping section makes up two thirds, i.e., approximately 130 cm.

In Fig. 1 a mechanical bond 7 in form of stitches is shown which connects the second surface 13 of the belt strap 6 to itself to form the support section 3. In other words, the support section 3 is arranged as an annularly closed loop 9 of a fixed circumferential length of approximately 120 cm. The mechanical bond 7 can be improved by providing an additional layer of the belt strap 6 material in the area in which the stitches are arranged. Alternatively or additionally, a chemical bond could be used to connect the surfaces 11, 13 of the belt strap 6 to form the annularly closed loop 9. It is also conceivable that the annularly closed loop 9 is formed by splicing or directly woven when the belt strap 6 is manufactured.

In an exemplary embodiment shown in Fig. 1 the second surface 13 of the belt strap 6 faces towards an inside of the annularly closed loop 9 whereas the first surface 11 of the belt strap 6 faces away from the inside of the annularly closed loop 9. It is, however, also possible that the belt strap 6 is twisted such that both the first and the second surface 11, 13 partly face towards the inside of the annularly closed loop 9 and partly faces towards the outside of the annularly closed loop 9, i.e., away from its inside,.

The support section 3 further comprises a contact surface 17 which is arranged on the second surface 13 of the belt strap 6. The contact surface 17 is made from an elastic or material and is provided to improve the comfort of a person using the device 1. It can, for example, be attached to the remainder of the device 1 by a chemical and/or mechanical bond. Alternatively, it is possible that one of the surfaces 11, 13 is itself used as a contact surface 17. The contact surface 17 is provided for contacting a cheek and an occiput of a head to be supported by the device 1. Obviously, the contact surface 17 is not a direct contact with the occiput but, for example, with the skin on top of the head or with the hair of the person using the device 1.

The clamping section 5 extends from the support section 3. The clamping section 5 is not provided as a closed loop but has an open end 19 delimiting and the device 1 to the opposite end of the annularly closed loop 9. Attached to the clamping section 5 are a plurality of gripping means 21 in the form of elevations which improve a clamping or holding of the clamping section 5 between a part of a body of a person using the device 1 and a second surface.

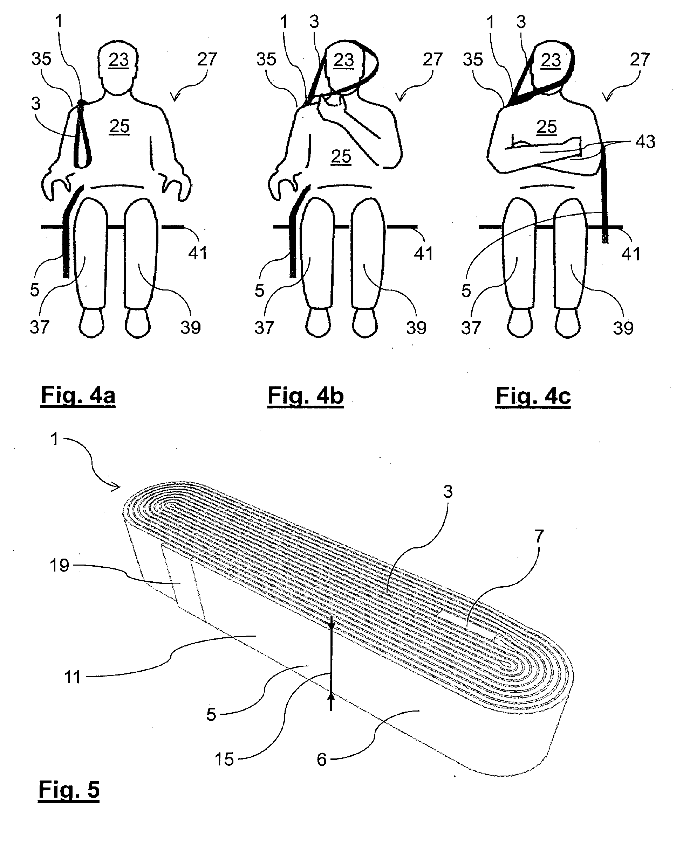

The device 1 shown in Fig. 1 can advantageously be rolled up into a stowage position as shown in Fig. 5. As Fig. 5 demonstrates the principle of the device 1 of Fig. 1 in the stowage position, not all details of the exemplary embodiment of Fig. 1 are shown. In the stowage position the device 1 is of generally cylindrical shape. However, the outer perimeter of the cylinder formed by the device 1 in the stowage position does not necessarily have to be of a circular shape about it can also be of different shape, for example, oval or a stretched oval as shown in Fig. 1. The height of the cylinder formed by the device 1 in the stowage position is delimited by the maximum width 15 of the support section 3 and the clamping section 5. The maximum extension of the cylinder formed by the device 1 in the stowage position is determined by a thickness of the belt strap 6 forming the device 1 and the overall length of the device 1. As can be seen in Fig. 5, in the rolled up position an outer surface of the device 1 is formed by the first surface 11 of the belt strap 6. Inside the rolled up device 1 the first surface 11 is in contact with the second surface 13 of the belt strap 6 along the clamping section 5. In the support section 3 the first surface 11 is in contact with the first surface 11 and the second surface 13 is in contact with the second surface 13.

The device 1 is, however, not only defined by the already described structural features but also in that it can be used in a very specific manner to hold a head of a person in an upright position. In Fig. 2 a head 23 and parts of an upper body 25 of a person 27 are shown which uses the device 1 according to the present invention as shown in Fig. 1. The person 27 is shown facing towards the viewer, i.e., the ventral side of the head 23 and the upper body 25 of the person 27 using the device 1 are shown. In Fig. 2 only the support section 3 and the annularly closed loop 9 formed by the support section 3 are shown.

As can be seen in Fig. 2 the device 1 is adapted such that it can be arranged around the head 23 of the person 27 using the device 1 in such a manner that the contact surface 17 which is not visible in Fig. 2 is in contact with the occiput 29 or the hair on top of the occiput 29 and the left cheek 31 of the person. From the left cheek 31 the annularly closed loop 9 extends at least partly in front of the chin 32 or the neck 34 of the person 27 using the device 1. The device 1 can, however, also be arranged on the other side of the user, i.e., for supporting the head 23 from tilting to the right without requiring any modification of the device 1 itself. It just has to be arranged on the opposite side of the head.

The support section 3 is arranged such that it extends from the head further on the dorsal side of the upper body 25 of the person 27 using the device 1. In other words, from the support section 3 to the clamping section 5 the device 1 is arranged at least partly along the back and in the particular example of Fig. 2 along the back of the right shoulder 35 of the person 27 using the device 1. It is preferred to arrange the device 1 on the shoulder 35 as far out from the head 23 as possible, e.g., close to an armpit, to provide maximum lateral or sideways support. In the example shown in Fig. 2 the ventral side of the person 27 is seen by the viewer. Hence, that part of the device 1 extending behind the upper body 25 is not visible to the viewer. The arrangement of the device 1 around the head 23 of the person 27 is common to all uses of the device 1 according to the present invention.

In brief, the device 1 is placed on a user with the following steps to arrive at the arrangement shown in Fig. 2:
a) placing the closed loop 9 on the outer side of a shoulder 29, so that the support section 3 can dangle down on the front and the clamping section 5 on the back of the upper body 25,
b) placing the closed loop 9 loosely around the head 23 along the occiput 29, the cheek 31 and the chin 32,
c) putting the support section 3 and the clamping section 5 slowly under tension until the head 23 is fixed in the desired position,
d) clamping the holding section 5 between a first surface and a second surface and,
e) if necessary, straightening the closed loop 9 around the head 23 slightly until the person 27 feels most comfortable.

The device 1 supports the head 23 of the person 27 from tilting in a lateral direction or sideways. The inventor has found that it is advantageous to support a head 23 against lateral movement by bringing the device 1 in contact with the cheek 31 as supporting the weight of a head 23 on a cheek 31 is a common feeling when sleeping on a pillow whereas supporting the full weight of a head 23 by a forehead 33 as known from the prior art is conceived as being uncomfortable as supporting the weight of a head 23 on the forehead 33 is an uncommon sensation.

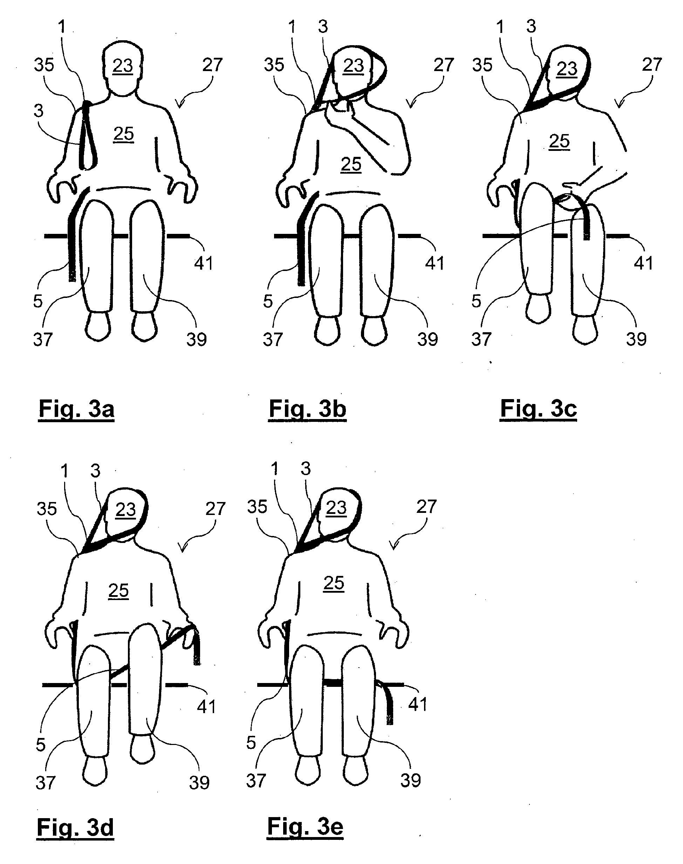

In the following two different advantageous ways of arranging or wearing the device 1 according to the present invention on a person 27 that wants to use the device 1 to support its head 23 in an upright position will be described with reference to Figs. 3a to 3e and 4a to 4c. Particular reference will be made to Figs. 3e and 4c in which two different possibilities according to the present for holding the clamping section 5 of the device 1 between a first surface in from of a part of the body of the person 27 using the device and a second surface are shown. At the same time, two different embodiments of a method of supporting a head using a device 1 according to the present invention are described.

In Fig. 3a the device 1 is shown resting on a right shoulder 35 of a sitting person 27. In Fig. 3a the support section 3 extends on the ventral side of the upper body 25 of the person 27 using the device 1 and the clamping section 5 extends at least partly along the dorsal side of the person 27.

Next, the person 27 is shown in Fig. 3b to arrange the support section 3 on its head 23 in the manner already described with reference to Fig. 2. Thus, reference is made to the preceding paragraphs in which the arrangement of the support section 3 on the head 23 is described in more detail.

Finally, in Figs. 3c to 3e it is shown how the person consecutively lifts up its right leg 37 and its left leg 39 and arranges the clamping section 5 of the device between the tights of the person 27 and a seating 41 on which the tights rest. As can be seen best in Fig. 3e once the device 1 has been completely arranged on the person 27, the clamping section 5 is held between a first surface in from of the tights and a second surface 41 in form of a seating 41 on which the tights rest. Thereby, any lateral movement of the head 23 to the left side viewed from the person 27 will be transferred through the device 1 around the back of the person to the clamping section 5 which is tightly held between the tights and the seating 41. Provided that the device 1 has been arranged appropriately as shown in Fig. 3e the load of the head 23 that tries to tilt laterally will be transferred to the tight and the seating 41 and the head 23 remains in an upright position.

In Fig. 4a to 4c a second way of arranging the device 1 on a person 27 or user is shown. Figs. 4a and 4b are identical to Figs. 3a and 3b and will, therefore, not be described again. Instead reference is made to the preceding paragraphs.

However, in Fig. 4c a different way of clamping or holding the clamping section 3 is shown. Instead of arranging the clamping section 3 between at least one tight and a seating 41 as shown in Fig. 4e, the clamping section 3 is held between the crossed arms 43 as a part of the body of the person 27 and the ventral side of the upper body 25 or breast or chest of the person 27 using the device 1 as a second surface. Thus, any lateral tilting of the head 23 to the left will be transferred through the device 1 around the back of the person 27 and the clamping section 5 to the arms 43 and the ventral side of the upper body 25. The second embodiment can, advantageously, also be used when a person 27 is not seated on a seating but, for example, when the person sits on its haunches or is standing.

## Claims

1. A device (1) for supporting a head (23) of a sitting person (27) in an upright position comprising a support section (3) and a clamping section (5),
wherein the clamping section (5) and the support section (3) are formed from a flexible material having a shape of a flat belt strap (6),
wherein the support section (3) is formed as an annularly closed loop (9) and comprises a flat contact surface (17) for contacting a cheek (31) and a occiput (29) of a head (23) to be supported in an upright position,
wherein the clamping section (5) is connected to the support section (3) such that a load can be transferred from the support section (3) to the clamping section (5) and the clamping section (5) can be held between a first and a second surface,
wherein the device (1) can be arranged on a person (27) whose head (23) is to be supported in an upright position such that
the annularly closed loop (9) extends around the head (23) of the person (27) in such a manner that the contact surface (17) is in contact with a cheek (31) and an occiput (29) of the head (23),
at least a part of the annularly closed loop (9) extends from the cheek (31) onward on a ventral side of a chin (32) or a neck (34) of the person (27),
the device (1) extends from the support section (3) to the clamping section (5) at least partly on a dorsal side of an upper body (25) of the person (27),
the clamping section (5) is held between a first surface (43) and a second surface (41) such that a load created by a tilting of the head (23) towards a transversal direction is transferred through the device (1) and a part of the ventral side of the upper body (25) of the person (27) to the clamping section (5) and from the clamping section (5) to the first surface (43) and the second surface (41).

2. The device (1) according to claim 1, wherein the clamping section (5) and the support section (3) are formed from a single piece.

3. The device (1) according to claim 1 or 2, wherein the clamping section (5) and the support section (3) are formed from a belt strap (6).

4. The device (1) according to any of the preceding claims, wherein the contact surface (17) is formed from an elastic material.

5. The device (1) according to any of the preceding claims, wherein a circumferential length of the annularly closed loop (9) formed by the support section (3) is fixed.

6. The device (1) according to any of the preceding claims, wherein the clamping section (5) comprises at least one gripping means (21) for improving a load transfer from the device (1) to a first surface (43) and a second surface (41) when the clamping section (5) is held between the first surface (43) and the second surface (41).

7. The device (1) according to any of the preceding claims, wherein the device (1) is formed such that it can be rolled up into a stowage position,
wherein in the stowage position the device (1) has a generally cylindrical shape having a height and a radius, wherein the height corresponds to a width (15) of the clamping section (5) and/or the support section (3).

8. The device (1) according to any of the preceding claims, wherein the device (1) consists of the support section (3) and the clamping section (5).

9. Use of a device (1) according to any of the preceding claims for supporting a head (23) of a sitting person (27).

10. Use of a device (1) according to claim 9, wherein the annularly closed loop (9) is arranged on a head (23) of the person (27) in such a manner that the contact surface (17) is in contact with a cheek (31) and an occiput (29) of the head (23) and at least a part of the annularly closed loop (9) extends from the cheek (31) onward on a ventral side of a chin or a neck of the person (27) and
the device (1) is further arranged such that the device (1) extends from the support section (3) to the clamping section (5) at least partly on a dorsal side of an upper body (25) of the person (27).

11. Use of a device (1) according to claim 10, wherein the clamping section (5) is held between a first surface in form of a tight of the person (27) and a second surface (41) in form of a seating (41) on which the at least one tight rests.

12. Use of a device (1) according to claim 10, wherein the support section (3) is held between a first surface (43) in form of an arm (43) of the person (27) and a second surface in form of a ventral side of the upper body (25).

13. A method of supporting a head (23) of a sitting person (27) in an upright position using a device (1) according to any of claims 1 to 8,
wherein the annularly closed loop (9) is arranged on the head (23) of the person (27) in such a manner that the contact surface (17) is in contact with a cheek (31) and an occiput (29) of the head (23) and at least a part of the annularly closed loop (9) extends from the cheek (31) onward on a ventral side of a chin or a neck of the person (27) and
the device (1) is further arranged such that the device (1) extends from the support section (3) to the clamping section (5) at least partly on a dorsal side of an upper body (25) of the person (27).

14. The method according to claim 13, wherein the clamping section (5) is held between a first surface in form of a tight of the person (27) and a second surface (41) in form of a seating (41) on which the at least one tight rests.

15. The method according to claim 13, wherein the support section (3) is held between a first surface (43) in form of an arm (43) of the person (27) and a second surface in form of a ventral side of the upper body (25).
